# EUROPEAN PATENT APPLICATION

(11) **EP 3 021 074 A1**
(43) Date of publication of application: **18.05.2016**
(21) Application number: 14193080.0
(22) Date of filing: 13.11.2014
(51) Int. Cl.: G01B 21/04, G01B 11/00, G01B 5/008, G01C 15/00

(54) **Motionless measurement system control**

(71) Applicant: Hexagon Technology Center GmbH, 9435 Heerbrugg (CH)
(72) Inventor: Kotzur, Norbert, CH-9460 Alstätten (CH); Pettersson, Bo, 1279 Luxembourg (LU); Schiestl, Ulrich, A-6845 Hohenems (AT); Zebhauser, Benedikt, CH-9400 Rorschach (CH)
(74) Representative: Gyaja, Christoph Benjamin

(57) **Abstract**

The present invention relates to a hand guided coordinate measurement system (1) for surveying of a geometrical feature of an object (4), which comprises a measurement probe (2) to be manually operated by a human worker (5) to approach the to be surveyed object feature (4) by hand-guidance, and a measurement unit (3) built for determining geometrical coordinate information of the geometrical feature of an object (4) approached by the measurement probe (2) in at least three dimensions.

According to the invention, the system (1) comprises a voice control with an acoustic input unit (111) built to receive and evaluate acoustic commands from the worker (5) as voice control and an acoustic feedback unit (110) built to provide acoustic feedback to the worker (5).

## Description

The present invention relates generally to a hand-guided measurement system according to claim 1 and to a method of operating such a hand-guided measurement system according to claim 14.

The present invention relates to the field of art of coordinate measurement systems, where the probe, by which the actual measurement is performed, is manually operated by a hand of the worker. An exemplary embodiment of such a coordinate measurement system is for example a laser tracker, where a stationed measurement unit is tracking and surveying a measurement probe by optical means, which probe is moved around by the operator and placed at the locations to be measured. When the probe is in place, the worker or an assistant issues a measurement command, whereby actual coordinate information of the probe is captured.

Another, quite similar exemplary embodiment of such a hand-guided coordinate measurement system is for example a tachymeter like device, such as a total station (TPS), by which desired measurement points are targeted and surveyed. Often measurement poles or target reflectors, which are used as measurement probes, can be carried around and placed at the desired measurement locations by a worker. Still another exemplary embodiment of such a hand operated coordinate measurement system is a GNSS pole surveying systems, where a worker carries a surveying pole equipped with a radio navigation system, such as a navigation satellite receiver like GPS, Glonas, etc.

Yet another exemplary embodiment of such a manually operated coordinate measurement system is an articulated arm coordinate measurement machine, where a worker handles a movable tip of an arm which comprises a measurement probe. The worker guides the probe to the desired measurement point at a target object to be surveyed and, when in place, presses a button to capture a measurement value.

Such hand guided coordinate measurement systems are operated in conjunction with a variety of user interfaces, which can e.g. comprise keypads, buttons, lights, display units, local terminals, mobile terminals, wired or wireless interfaces to communicate with computing equipment like laptops, tablets, mobile phones or the like.

Besides the approaching of the desired measurement locations, the mayor tasks for the worker who is operating such a coordinate measurement system are a triggering of a measurement and a documentation of the measurement. Documentation is often done by providing meta-information related to the measurement, like kind of measurement, description of the measurement location, environmental conditions, date, time, validity, expected accuracy, statistical data, measurement device information, etc. Beside, the worker has to select special device functions, like measurement routines and parameters, special functions, calibrations, etc. wherefore often hierarchical menu structures are used.

Hand-guided measurement systems can include an interactive terminal to input measurement meta-information to further describe the currently performed measurement, e.g. a display with keyboard, a mouse and/or a touch screen etc. For practical reasons, in particular for size and weight, this terminal is mostly not located directly at the measurement probe, but to some extent remote from it, e.g. directly on a TPS housing or at a base of an articulated arm. In other embodiments, it can e.g. also be located in a controller housing located on a respective measurement pole or being held by the worker.

The worker, who is operating the measurement probe of such a hand-guided system, has to concentrate on targeting the correct measuring point with the sensing element of the measurement probe. Therefore, he has to continuously watch the object to be measured and in many cases has to bring himself into a physical position, in which he is capable to comfortably reach the desired point to be measured and to stay in this position during the measurement. Therefore, the user is often not physically able to input measurement meta-information into the measurement system directly during the measuring process, without interrupting the process. Instead, he has to wait until the measurement process is completed before he can input such meta-information, but such a separated, succeeding entering of meta-information via a keyboard or the like can be time-consuming and some information tends to be forgotten until then. In general, inputting measurement meta-information is seen quite inconvenient and time-consuming for the worker and is therefore often done rather poorly or omitted at all. Nevertheless, when measurement tasks are getting more and more extensive and complex, the availability of measurement meta-information gets more and more important and above-mentioned disadvantages are more and more oppressive.

An example when measurement meta-data has to be input into a TPS system or a GNSS pole system as described above during the measurement process is a required coding of measured field points. Therein, the operator has to selects a specified code from a list shown in the display of the system terminal to specify the kind of a measured point had or will survey, like e.g. a fire hydrant, a manhole cover, etc. To find the right code, he has to navigate in a hierarchical structure, browse through a rather long list of possibilities by pressing "Up"- and "Down"-buttons to find the right code, or he has to type in a clear text name by an alphanumeric keypad. In both cases, he needs to operate keys or a touch screen and watch a display of the terminal - which is cumbersome.

As discussed, a screen and/or keyboard operation has several drawbacks regarding the usability. The fact that such devices are often used outdoors also raises additional drawbacks of such terminal interfaces. For example in cold weather conditions, the user has to wear gloves, which are obstructive when operating a keypad or a touchscreen. If he had to manipulate dirty objects to reach a proper measurement position, he has got dirty hands. In some situations, the terminal display gets wet due to rain or in another situation, it is exposed to strong sunlight so that the display, which provides output or interaction data from the system, gets difficult to read.

Beside the above mentioned terminal-like user interfaces, also acoustic interfaces with speakers and/or microphones are sometimes used for controlling and for providing feedback in such measurement systems.

For example DE 101 18 668 shows a coordinate measurement device having a controller with a microphone for input of spoken commands. According to a database of individual spoken commands, a speech recognition system converts the spoken commands into control commands for the device.

JP 2002 277 244 shows a surveying instrument using voice for controlling and instructing the surveying instrument body. It comprises a voice input means, which operates the surveying instrument and a voice synthesizing output means which reports survey results and repetitively reports an operation inputted by the voice input means.

US 6,732,077 shows a speech recognition equipped recording apparatus for recording attribute data in a geographic information system environment with a position locating system. A mobile data terminal for collecting attribute data is coupled to a speech recognition system to receive said attribute data and operating commands when verbalized by an operator to update information stored by said geographic mapping system.

With respect to the GPS-pole in US 8,125,379, it is suggested that it can be equipped with an interface device, which might be embodied including a voice recognition input and/or controller to be used to receive commands.

US 2011/0178 754 side mentions a portable Articulated Arm Coordinate Measuring Machine with an embodiment, where the user interface includes audio and/or haptic communication with the operator.

A hand-guided measurement system, e.g. like the abovementioned articulated arm and laser tracker, comprises a measurement probe or portion which is guided by hand. The measurement probe or portion can be an integral part of the measurement system, as it is the case for articulated arms, or it can be an standalone device remote from the rest of the system, as it is e.g. the case for a laser tracker. The measurement probe comprises a sensing element, e.g. a touch probe, an electronic distance meter, a scanner, etc. as well as a triggering element to initiate a measurement. A measurement is performed by bringing the sensing element into contact with the desired point to be measured by hand and then triggering the measurement by actuating the trigger, which is also done by hand. The fact that both tasks are executed by hand is disadvantageous, because pulling the trigger has to be done very carefully, as it otherwise can lead to slight movements of the sensing element, which would result in losing the proper measurement position and therefore in a measurement error.

An other disadvantage of those prior art designs is also that the known handling of push buttons to be pressed by the users hand for triggering, will result in at least some small movements, which can decrease measurement accuracy. If the probe head is thereby unstable during the measurement, no precise measurement results can be achieved, at least not with the high accuracy which is demanded for above mentioned measurement systems, which is in the range of millimetres, sub millimetres or even micrometers.

It is therefore an object of the present invention to improve a hand guided coordinate measurement system, in particular with respect to its usability for a worker.

It is a special object to improve the triggering of the actual measurement of a handheld probe in such measurement system.

Another special object of the invention is to increase the measurement accuracy, in particular to ease a stable holding of the probe-device while the actual measurement takes place.

A further object of the invention is to ensure that the point in time, when the measurement takes place is exactly defined, but without any movement of the workers hands, which could impair a stable holding of the measurement probe.

Those objects are achieved by realising the features of the independent claims. Features which further develop the invention in an alternative or advantageous manner are described in the dependent patent claims.

The present invention relates to a hand guided coordinate measurement system for a surveying of geometrical features of an object. This measurement system can for example be embodied as a tachymeter, a laser tracker or an articulated arm. The system comprises at least a measurement probe to be manually operated by a human worker or operator. By means of this probe, the worker approaches the object feature to be surveyed by hand-guidance. Also comprised is a measurement unit built for determining geometrical coordinate information of the geometrical features of an object which is approached by the measurement probe in at least three dimensions, which determining is initiated based on a trigger event which can e.g. be electrically signaled by a trigger signal.

According to the present invention, the coordinate measurement system comprises also an acoustic input unit (111) built to receive and evaluate acoustic commands which are provided as spoken text by the worker (5) as voice control, as well as a feedback unit built for providing acoustic feedback to the worker, in particular speech feedback.

In addition, the system according to the invention can comprise a measurement trigger unit built to define a point in time when the coordinate information is captured by issuing the trigger signal (108), which is operated and/or initiated by the voice control.

In other words, the invention relates to a hand guided measuring system, in particular embodied as of one the kinds described above, which comprises a voice control system with an input and output unit.

The voice control system according to the invention is built to receive acoustic information from the operator, e.g. by a microphone, and to output information from the system to the user by acoustic signals, in particular in spoken language, e.g. by a loudspeaker.

Microphone and loudspeaker can be comprised in the system, e.g. in the mobile measurement probe or in a stationed portion of the system, or preferably be comprised in a wireless mobile acoustic terminal, e.g. in a head-set which can be worn by the worker, preferably at his head, especially at his ear. Thereby, the worker doesn't need to use his hands to operate the system and has both hands free to manipulate other stuff, in particular to operate and manipulate the probe head.

An input unit of the voice or speech control according to the invention comprises a spoken language recognition system, by which spoken words are recognized and transformed into commands to command the system, e.g. to navigate through the system menus, initiate system functionalities or actions, set the system into certain states, start or stop system procedures or even start-up and shut-down the whole system, etc. For example, such voice control can be in particular advantageous, when the user has to wear gloves or got dirty hands and can therefore not easily operate a keypad or touch terminal.

A output unit of the voice control system according to the invention can further comprise a spoken language generation system to generate a system output in form of spoken language, e.g. to confirm the appropriate reception of a spoken user command, e.g. by repeating the recognized words by re-synthesizing the command from an abstracted layer to a voice output or by issuing another confirming sound after a spoken command was successfully identified - or a query or a failure sound, if not. The system can also output help information in spoken language regarding the usage of the measuring system, for example additional spoken help information for a specific menu item or system function.

By the voice or speech control system according to the invention, the operator can also input data into the system, in particular measurement meta-information. The measurement meta-information can for example comprise a verbal description of information regarding the position of the actual measurement point or of a feature of the object, information regarding the kind of object or feature which is measured, regarding the condition of the object or the measurement environment, about date, time, environmental conditions, about the worker who did the measurement, about a desired purpose of this measurement, and so on.

For such a hand-guided measurement system according to the invention, the voice control system is thereby capable to receive measurement meta-information directly during the measurement process without the need for the user to interrupt the measurement process. It is not required to unhand the probe head, to move away from a proper measurement position or even to look away from the object region to be measured. For example, the metadata input can be achieved by setting the measurement system in an appropriate measurement mode, e.g. by a spoken command like "start meta-information mode!". In another embodiment, the system awaits a measurement trigger event and after reception of this trigger event, the system automatically awaits measurement meta-information until the next measurement trigger command or another command which terminates this measurement mode is recognized. In a special embodiment, the system can also indicate the awaiting of measurement metadata by acoustically outputting a request like "Description:", which can be answered by a spoken description of the previously measured feature of the object or by "none". Compared with other data input solutions, the measurement meta-information can thereby be inputted into the system in a fast, easy and user-convenient way during the measurement, without the need to interrupt the measurement process.

The system according to the invention can also comprise a system configuration unit which is built to setup system or measurement parameters, which is operated by voice control. It is operated by spoken text from the worker (5) via the voice control, so that system configuration settings or parameter values can be changed by the worker via voice from a random location. The system configuration unit (105) therefore provides a flat command hierarchy in which sub-menu commands for control and setup of the measurement system (1) are directly accessible by a non-hierarchical voice command. This means that functions, settings or parameters, which would be provided on a display in a hierarchical order and which would have to be approached by step by step through a hierarchical menu that is e.g. sorted according to a logical grouping, are accessible by a single voice command. It is not required to step through multiple hierarchical levels by multiple voice commands in order to access those system controls, but they can be accessed directly by a single voice command.

For an above described hand-guided measuring system, the voice control can be used to trigger a measurement by a spoken command - instead of manually issuing a trigger. This is advantageous compared to physically pressing a trigger button as in prior art systems, because measurement errors due to slight movements of the hand-guided measurement probe head, which are caused by pressing the trigger button, will not occur any longer. The voice control system is thereby in addition able to receive measurement meta-information directly during the measurement process, as well as to receive commands for controlling, configuring and setting up the measurement system, without the need for the operator to use a display and/or a keyboard and to manipulate physical buttons or touch-screen etc. Also, the system can output information in form of spoken language, which omits the need for the user to read the terminal display, which can sometimes be problematic as discussed above. The user does not even need to have eye contact with the display during measurement process.

Some more specialized embodiments according to the invention can e.g. comprise the following special features.

A special problem with above mentioned prior art acoustic user interaction can also be the fact, that they are responding quite sluggish and unpredictable. In particular, as voice recognition is quite a computation intensive and it comprises many not time deterministic routines, a voice control of time critical tasks like the triggering of a measurement by such a system is not fully satisfactorily. The measurement systems user needs to know the exact point in time, when the measurement is executed. If the execution is delayed, he might already have moved the measurement probe away from the desired measurement point or into a not so optimal measurement position or orientation of the probe head.

The measurement triggering unit according to the invention can be built in such a way that a voice command for triggering, which is issued by the worker, is split in at least a first and a second sound sequence, separated by a pause. Therein, the first sound sequence is a preparative portion for arming the trigger and the second sound sequence defines the point in time of the trigger. Therefor, the second sound sequence can be analyzed based on a, in particular nonlinguistic, physical characteristic of the second sound sequence. The first sound sequence can therein be evaluated according to its linguistic content, in order to be identified as such.

According to the invention, the point in time of the trigger can be before the end of the second sound sequence. In particular, a certain acoustic characteristic during the triggering command can exactly define the point in time, which characteristic can happen before the end of the triggering command. For example in a voice command for triggering embodied by "aaaaaaaand now", the first sound sequence can be the "aaaaaaaand" and the second sound sequence can be the "now" portion of the command, wherein e.g. the first amplitude raise of the "n" of "now" can define the point in time of the trigger, even when "now" has not been fully spoken by then.

The point in time can also be a time period after the second sound sequence, which time period can be defined by the duration of the pause between the first and the second sound sequence or by the duration of the pause between multiple second sound sequences. In particular the duration of the time period can be equal to the duration of the pause.

The preparative portion and/or multiple second sound sequences can be chosen to provide a regular rhythm pattern, and the point in time of the trigger can then be predicted based on this rhythm pattern, in particular wherein the point in time of the triggering is determined on basis of the rhythm pattern. For example, in a voice command for triggering embodied by a countdown like "3 - 2 - 1 - go", the point in time of the trigger can be defined by a prediction according to the rhythm pattern of the command. In special embodiment thereof, the portion of the command, which actually occurs at the trigger-time can even be omitted and the point in time being defined bases only on the rhythm pattern of the voice command. For example, in a voice command for triggering embodied by a countdown like "3 - 2 - 1 - ", where the triggering "0" is omitted and there is no actual sound at the desired point in time when the triggering should occur, this point in time is predicted base on the rhythm of the other sequences of the command with high accuracy.

In an embodiment according to the invention, the acoustic input unit can be built to determine a breathing rhythm of the worker according to sounds picked up by the voice control and thereupon, the point in time of the trigger can be aligned to a breathing pause or an unhasty and reposeful exhaling period when the worker is more steady than in other periods of breathing.

In another embodiment according to the invention, measurement can be done over a period of time and not only at a single point in time, wherein the triggering point in time explained before can define a start of the measurement capturing and the duration of the second sound portion or a succeeding additional second sound portion can define a measurement period as a timeslot during which measurement data is captured continuously or sequently, so that a sequence of multiple coordinate information is captured.

In yet another embodiment, the acoustic input unit according to the invention can comprise an emergency unit, built in such a way that the system is shut down to a safety state upon a change in the characteristics of the voice of the worker, in particular upon an abrupt increase in volume or pitch of the voice and/or upon specific predefined keywords or keysounds.

The acoustic input unit according to the invention can comprise an access control interface, built to recognize a specific worker according to his specific voice characteristics, for example according to a prosodic feature of his voice. This recognizing can be used to grant or deny access to certain system functions or the whole system.

The measurement system according to the invention can comprises a classification unit built to distinguish the spoken language command into different categories, wherein at least one of the categories is evaluated according to acoustic properties of the spoken language command, in particular according to nonlinguistic acoustic properties. For example, those categories can comprise at least two of a meta-category, a-setup-category, a trigger category, a breathing rhythm category, an emergency category and/or an access category, each handled by the according units discussed before, preferably with different deterministic and priority.

The acoustic input unit can also comprise a background noise cancellation unit, in particular comprising at least one additional microphone evaluating background noise to be subtracted from signals of a main microphone for receiving the acoustic signals for the voice control.

The acoustic input unit can also comprise a gateway to be configured to direct acoustic information to a voice communication channel to another entity or worker, in particular via a wireless acoustic communication unit like a mobile phone or a walkie-talkie.

The measurement system according to the invention can comprise a headset for the voice control, which is worn by the human worker, in particular wherein the headset can be adapted to special environmental conditions, for example being rugged, outdoor compatible, waterproof, cleanroom-compatible, explosion-proof and/or with integrated ear protection.

The invention also relates to an according method of triggering a hand guided coordinate measurement system for surveying geometrical features of an object. The method involves a manual guiding of a measurement probe by a human worker for an approaching of object features to be surveyed with a measurement probe by hand-guidance, and a determining of geometrical coordinate information of the geometrical features of the object in at least three dimensions by means of a measurement unit, which determining is based on a triggering event. The method involves a voice control with a receiving and evaluating of acoustic commands from the worker (5), which comprises recognizing a spoken language command and a providing of acoustic feedback from the system to the worker by an acoustic feedback unit.

The method according to the invention can in particular comprise an operating by voice control of at least one of
- an inputting of meta-information for the geometrical coordinate information by the acoustic command, preferably by spoken text,
- a setting up of system or measurement parameters of the measurement system (1) by the acoustic command, preferably by spoken text,
- a defining of a point in time when the coordinate information is captured by the trigger event based on the acoustic command, preferably according to nonlinguistic physical characteristics of the acoustic command,
- a detecting of a change in the characteristics of the acoustic commands and thereupon initiating a shutting down of the measurement system (1) to a safety state, and/or
- a recognizing of a specific worker (5) according to his specific voice characteristics and thereupon providing an access control to a functionally of the measurement system (1),
preferably as discussed elsewhere in this document.

The method can also comprise a classifying of the spoken language command into different categories, like into a meta-category, a setup-category, a trigger-category, an emergency-category and/or an access-category as explained before, which categories are handled differently by different units and preferably with different deterministic. Therein an evaluating of at least one of the categories can be done according to acoustic properties of the spoken language command which are nonlinguistic acoustic properties. For example, the trigger-category which is defining the point in time when the coordinate information is captured with a measurement trigger unit, that is according to the invention operating by voice control, can preferably comprise a splitting of a voice command for triggering in at least a first and a second sound sequence - which sequences are separated by a pause. Therein, the first sound sequence, as a preparative portion, is so to say arming the trigger, and the second sound sequence is thereupon defining the point in time of the actual triggering event.

The method according to the invention can in particular in addition comprise setting up system or measurement parameters by operating a system configuration unit by voice control.

Apparently, the herein mentioned further developments which are described with respect to system are applicable in form of a corresponding method as well, in particular on basis of the above cited method.

The method, or at least those parts of it which involve computation, can also be embodied as a computer program product that is stored on a machine readable medium or embodied as electromagnetic wave (such as wired or wireless data signal). Consequently, the invention further relates to an computer program product comprising program code stored on a machine-readable medium, or computer-data-signal embodied as an electromagnetic wave, for triggering a hand guided coordinate measurement system by voice control, which is receiving a voice command for triggering. In particular with a splitting of the voice command for triggering in at least a first and a second sound sequence, separated by a pause, wherein the first sound sequence is arming the trigger as a preparative portion and wherein the second sound sequence is defining the point in time of the triggering event, preferably according to nonlinguistic physical characteristics of the second sound sequence.

Consequently the invention also relates to a computation means built to run a computer program providing functionality according to the invention, with or without the computer program actually loaded, in particular if comprised in a hand guided coordinate measurement machine as described herein.

Devices, methods and setups according to the invention are described or explained in more detail below, purely by way of example, with reference to working examples shown schematically in the drawing. Specifically,
- Fig. 1: shows an example of a first embodiment of a hand guided coordinate measurement system according to the invention in form of an articulated arm coordinate measurement system;
- Fig. 2: shows an example of a second embodiment of a hand guided coordinate measurement system according to the invention in form of a laser tracker;
- Fig. 3: shows an example of a third embodiment of hand guided coordinate measurement system according to the invention in form of a total station;
- Fig. 4: shows an example of another usage of a hand guided coordinate measurement system according to the invention;
- Fig. 5: shows an example of a fourth embodiment of hand guided coordinate measurement system according to the invention in form of a GNSS surveying pole;
- Fig. 6: shows an example of another usage of a hand guided coordinate measurement system according to the invention;
- Fig. 7a: shows a first example of a voice waveform for triggering a measurement of a hand guided coordinate measurement system according to the invention;
- Fig. 7b: shows a second example of a voice waveform for triggering a measurement of a hand guided coordinate measurement system according to the invention;
- Fig. 7c: shows a third example of a voice waveform for triggering a measurement of a hand guided coordinate measurement system according to the invention;
- Fig. 8: shows an example of a simplified block diagram of a voice control of a hand guided coordinate measurement system according to the invention;
- Fig. 9: shows an example of a simplified flowchart of a voice control of a hand guided coordinate measurement system according to the invention;
- Fig. 10: shows an example of tremor curves of a hand held measurement probe in a hand guided coordinate measurement system according to the invention;
- Fig. 11: shows an example of a nonhierarchal voice controlled system configuration in a hand guided coordinate measurement system according to the invention.

The diagrams of the following figures should not be considered as being drawn to scale. Where appropriate, the same reference signs are used for the same features or for features with similar functionalities. Different indices to reference signs are used to differentiate between different embodiments of a feature.

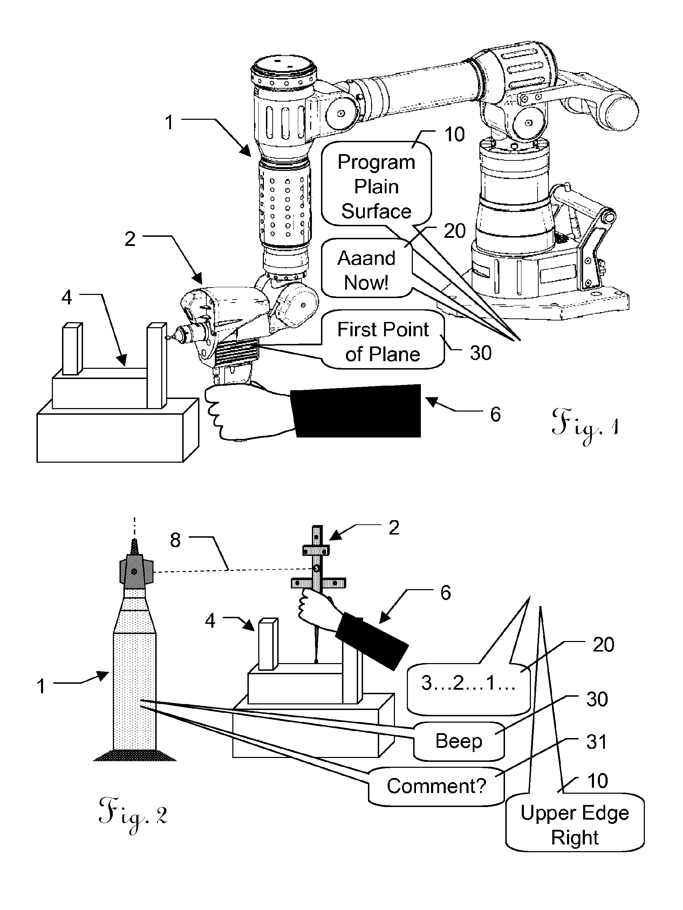

Fig. 1 illustrates an example of one of the possible embodiments of a hand guided coordinate measurement system 1 according to the invention in form of an Articulated Arm Coordinate Measurement Machine (AACMM). The AACMM comprises a base, which is stationed during measurement. The AACMM can be embodied to be permanently installed to a certain location, such as a measurement table, factory hall or the like, but can also be embodied as being portable between the measurements.

A movable end of the articulated arm, which is opposed to the stationed end, is manually movable by the hand of a worker. Movability is provided by multiple articulations along the arm, each providing at least one degree of freedom. The number and type of those articulations may vary from embodiment to embodiment. The movable end is equipped with a measurement probe head 2, which is manually movable by a human operator 5, user or operator, of whom only the arm is shown. For the movement, the movable end comprises some kind of handle, grip or another hand grip element, by which the worker guides the probe head to the desired measurement locations. The measurement probe 2 can have a probe tip which is permanently or detachably attached. The probe tip used for the measurement can for example be a touch probe as shown in this drawing, but can also be a contactless probe, like a scanning probe with a distance measurement by electromagnetic waves, in particular by light. For measuring, the operator approaches a desired measurement point or feature by the probe. The measurement can involve one or multiple discreet points in space or a continuous or quasi-continuous scanning of a plurality of points along a path or surface. In case of a single point measurement, a single point in time defines the triggering of the capturing of coordinate information, whereas in scanning there is a point in time defining the beginning of the scanning and another point in time defining the end of the scanning, with a measurement period of time in-between.

According to the present invention, the hand guided coordinate measurement system 1 comprises a system configuration unit for setting up system and configuration parameters for the measurement system, which is operable by acoustic commands. The worker operating the system can therefore articulate commands to the system and the voice control identifies them and issues the according action, just as a prior art system with a touchscreen or keypad interface would do when the operator selects the according command by those. In the shown example, a voice command 10 is shown for selecting a measurement program which is designed for the task of measuring a plain surface, by calling "Program: Plain Surface".

In the present invention, the hand guided coordinate measurement system 1 also comprises an acoustic feedback unit for providing acoustic feedback to the operator, in particular by speech synthesis and voice output. The worker is therefore not required to establish eye-contact to a display means of the system in order to get responses from the system when he issued a command, but he can simply hear a possible response to his spoken command. Such a response can be a simple confirmation, but can also be part of an interactive dialog of the worker and the system, e.g. when the first voice command was inaccurate, requires additional parameters or opens up a range of further possibilities. For example, when selecting a menu by a voice command without further specifying the desired selection within this menu, the system can ask the operator for his selection or a value to be set or it can provide a read out the possibilities to select from. In a special embodiment of the voice control system configuration according to the invention, there is no need for a hierarchical grouping of commands in sub menus, as each command is different and can be selected by a spoken command on a top level basis, so the operator does not have to learn and consider a grouping or hierarchy of commands or manufacturer defined menu structure, but can just speak the desired command.

In an advanced embodiment, the system according to the invention can also learn specific voice commands of an operator's vocabulary and which functions of the system should be matched to those voice commands. Thereby, the system can for example also identify the present operator according to special characteristics of his voice, which are different from other operators. For example, by this identification of the operator, the measurement system can be configured to just react on voice commands from a specific worker and ignore speech from others. There can also be multiple workers, each measuring with a probe linked to the same measurement system, and the system can associate voice commands from each worker to his specific probe according to the different characteristics of each of the operators voices. Apparently, this principle also works to distinguish commands for different probes linked to neighbouring systems. This identification can also be included in a selection, which command to execute by a certain voice command or to deny access to some functions the operator is not privileged to execute. For example, the user just speaks "calibration" and the system has previously learned which of a plurality of calibration routines this specific operator wants to execute by this, without going into dialog. Thereby, the worker can operate the system without using his hands to fiddle around with buttons or touch screens and without the need to keep eye-contact with a display, which means that he has always both hands free to operate he probe head, which is his actual task. There is no need to relinquish the probe head when some system configuration has to be done, like selection a certain measurement program or parameter, starting a calibration routine, etc. If a predefined sequence of measurement points is to be followed by the worker, the worker can also be instructed on where or what to measure next and also an according system configuration and/or measurement program change for the next measurement can be done automatically and announced to the worker by speech output. Nevertheless, the system according to the invention can still comprise a keypad and/or a display in addition to the voice interface.

In the shown example, a voice feedback 30 is issued by the system after a measurement of a first point, which informs the user that a "First Point of the Plain" to be measured in the previously selected measurement program has been captured. Not shown here, the system could for example also inform the operator that at least another two points of the plain have to be measured to define the plain or the system could inform the operator that after a measurement of five points, no plain could be fit with reasonable accuracy and therefore further points are required, etc.. Another (also not shown) example of an acoustic feedback would be a confirmation beep or an acoustic output of a speech synthesis of "Plain surface measurement selected!" after the issuing of the command 10.

According to the present invention, the hand guided coordinate measurement system 1 can comprise a measurement triggering unit for defining a point in time, when coordinate information is captured by the measurement system, which is also operated by voice control. The triggering of a measurement is considered separately from the configuration, because when triggering, a specific, deterministic point in time has to be defined, whereas the before mentioned system configuration does not have to be deterministic as it is not time critical with respect to its reaction time.

In a special embodiment, the voice control of the triggering can be built in such a way that the voice command for triggering is split in at least two sequences, which are separated by a pause. The first of the sequences is a preparative sound sequence, which preparative portion is used for arming the triggering and to await the actual trigger, according to which an exact point in time of the measurement is defined. In the shown example such a special embodiment is illustrated, and the voice command 20 for triggering is exemplary embodied by "Aaand Now!", wherein the word "Aaand" is the first, preparative sound sequence, which arms the trigger and which is identified by the voice control as such. The second sound sequence "Now!", which follows after the natural pause in-between the two words, defines the point in time, when the coordinate measurement values are captured. In an embodiment, the second sound sequence can be identified only according to its timing, e.g. according the sound amplitude, and does not have to be evaluated by speech recognition with respect for its linguistic content to define the point in time. In an advanced embodiment, a linguistic interpretation of the time point defining sound sequence can be done afterwards or in parallel to the triggering in order to decide whether to keep or discharge the coordinate information captured at the point in time of a physical property of the sound sequence.

The sound sequences can in particular be single, separate words. In special embodiments, they can also be portions of a single word which are highly distinguishable, e.g. like hard syllables, which are highly distinguishable from a quiescent portion in-between them - which quiescent portion can be interpreted as pause. Such a characteristic can e.g. be seen in an amplitude diagram of the spoken voice command for triggering..

**Fig. 2** shows an example of an embodiment of a hand guided coordinate measurement system 1 according to the invention in form of a Laser Tracker Coordinate Measurement Machine. The system comprises a stationed base device 1 and a measurement probe 2, which is held by an operator's hand 6. The laser tracker surveys the measurement probe 2 by optical means 8, in particular by a laser beam and/or by at least one camera. The probe 2 is brought into measurement contact with a geometrical feature of the object 4 to be measured, wherefore e.g. the shown contacting probe can be used.

According to the invention, a system configuration and a trigger unit are operated by voice control. The operator places the probe head 2 to the desired feature of the object 4 and then issues the triggering command 20 by speech. The command for triggering can again be a single-word command or can be split in at least two distinguishable sound sequences. The single-word triggering voice command can e.g. be words like "Now!", "Here!", "Measure!", "Go!", etc. According to a special aspect of the invention, those triggering sounds can also be evaluated according to their physical properties, as it will be discussed below. In the shown embodiment, the command for triggering is more precisely split into the three distinguishable sound sequences "3", "2" and "1", which are establishing count down towards the desired point in time of the measurement. The first sound sequence ("3") (or alternatively the "3" "2" seen as one or two first sound sequences) can be used as preparative sounds and to identify the triggering command according to their linguistic content and to arm for a second sound sequence that will follow, which is defining the exact trigger point in time. Alternatively the first sound sequence ("3") can be used as preparative sounds and to identify the triggering command according to its linguistic content and to arm, and the two second sound sequence "2" and "1" or the three second sound sequence "2" "1" and "0") that will follow, which are defining the exact trigger point in time according to the timing of their physical characteristics, in particular according to the resulting time rhythm of the physical characteristics.

According to the rhythm, or in other word according to said time differences between the individual sound sequences, the point in time of the actual measurement, which is desired when "0" is (or would be) reached can be predicted, for example by assuming equidistance between the sound sequences or according to pre-knowledge of another timing of the rhythm, which can again be individual for different operators. Based on such a prediction of the point in time of the measurement capturing, the triggering unit according to the invention does not even require that the actual "0" at the point in time of the measurement will actually be spoken by the operator - as it is illustrated in this example by the omitted "0", which is replaced by a space "_". The point in time of the expected "0" is therein determined by the pattern of the preceding sound sequences "3...2...1". Details on the prediction will be given below. Although the "0" can - in another embodiment of the invention - actually be spoken as well, an omitting of the actual sound can bring the advantage that the operator tends to be steadier when not speaking, so the measurement probe held in his hand will be kept stiller as well.

The shown system embodiment confirms the measurement by an acoustic feedback 30, which is in this example shown as a beep sound, preferably issued at the exact point in time when the coordinate information is captured.

The acoustic input unit according to the invention can then await meta-information for the just captured (or for the following) coordinate information. In the shown example, the measurement system explicitly requests metadata for the just captured measurement by asking "Comments?" via an acoustic speech synthesis output 31. Thereupon, the worker speaks "Upper Edge Right" which can for example be converted into plain text by the voice control of the system configuration unit and being stored together with the coordinate information for further processing. Another example of an operators response upon the "Comments?" request could be the spoken word "None", which would be recognized and the coordinate information would be recorded without metadata. In another embodiment, the system could wait with its request for metadata and only provide it, when the user does not provide metadata information out of his own intention, but e.g. triggers another measurement by a voice trigger according to the invention.

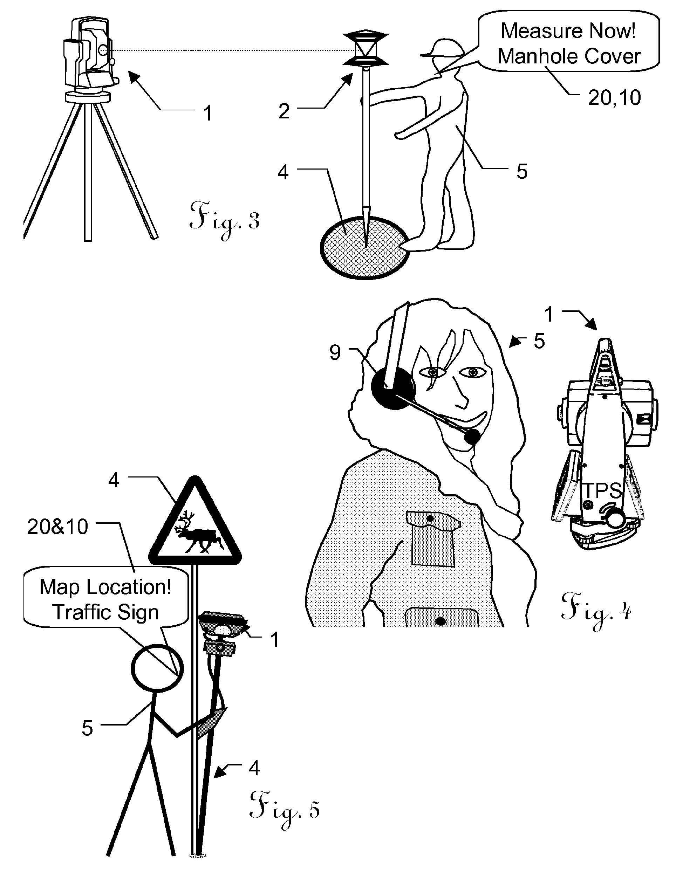

**Fig. 3** shows another example of an embodiment of a hand guided coordinate measurement system 1 according to the invention in form of a geodetic surveying system built as a tachymeter for determining polar coordinate information of a measurement target, which target is herein also referred to as measurement probe. This measurement probe or target is shown as a measurement pole held and carried around by a worker 5 at a site to be surveyed or staked out.

The shown tachymeter is embodied as a total station (TPS), which means that it comprises servo motors can e.g. automatically find and follow the measurement probe and has computation capabilities so that it can be automated to a great extent.

A proposed TPS or GNSS system comprising a herein described voice control system with an acoustic input unit, an acoustic output unit and a trigger unit, makes measuring field points much more convenient compared to conventional systems. The user can just place the measuring pole on a field point on a patch of land as object to be measured, and speak a command 20 to trigger the measurement (e.g. "Measure Now!") into his headset which as a wireless communication link to the stationed part of the system 1. Afterwards (or alternatively before) he can speak the appropriate kind code of the measured point in clear text (e.g. "manhole cover", "fire hydrant", etc.).

Another example for more convenience with the proposed new system is the ability to directly initiate frequently used system procedures by one single spoken command instead of browsing through menus via the system terminal, e.g. during the stationing and referencing within an superior coordinate system or during other instrument set-up procedures.

In the shown example, the worker 5 surveys a manhole cover 4 as object to be measured by holding the tip of his surveying pole (as measurement probe 2) onto the centre of it. When he is ready (and e.g. when he is holding the pole at the correct location and sufficiently vertical) he then issues a measurement, e.g. by speaking the preparative "Measure" and the time point defining "Now!" of his measurement command 20 (as discussed elsewhere in this document). The following words "Manhole Cover" define metadata 10 for the captured measurement point. In another example, the metadata 10 can also be provided in advance of the measurement, whereby for example also a special measurement program for this specific metadata item can be selected simultaneously and automatically. In a special embodiment, also the metadata 10 or part of it can be used as a first, preparative sound sequence portion, which is preparing the system for a subsequent trigger sound sequence portion that defines an exact point in time. As said, the exact point in time can preferably be defined before the actual triggering sound has ended, wherefore an actual meaning of the meaning of the second triggering sound sequence will not have been evaluated with respect to its linguistic content at the point in time the measurement takes place.

**Fig. 4** shows a worker 5 using a coordinate measurement system 1, according to the invention, which is embodied with a TPS like device as before. In this example of a measurement task, she 5 wears a head set 9 for acoustic information exchange with the measurement system 1. If a coordinate measurement system 1 according to the invention is operated in such a noisy environment, where the worker 5 has to wear ear protection, a headset 9 for the voice control system can e.g. be geometrically and/or functionally integrated into an ear protection means (or alternatively the voice control system itself can comprise ear protection means with the head-set already included). A headset 9 for the voice control system according to the invention can also be designed in a rugged outdoor compatible form, in particular water-proof or shock resistant, cleanroom-proof, explosion-proof etc., for using in outdoor applications or in special indoor environments.

The voice control system can further comprise an interface to connect a mobile phone, a walkie-talkie or another radio set to the voice control head-set 9. Thereby, the user can use one and the same head-set 9 either to work with the measurement system or to establish a voice communication with another entity or worker. An establishment of a voice communication can e.g. also be used in the other direction by calling up the measurement system for a remote usage, controlling, parameterisation or maintenance of the measurement system by an ordinary voice phone call. The voice control system can e.g. comprise a standard interface like Bluetooth, WLAN, GSM, GPRS, G3, etc. in particular wherein a standard mobile phone head-set can be used.

In an embodiment, the voice control can be operable in more than one language simultaneously by a direct, automatic recognition of the spoken input in different languages, without the need to manually define a certain system language. Thereby, users 5 with different mother tongue can seamlessly work with the same measuring system without language configuration and can also get responses from the system in the same language as they commanded it. As a special feature, the voice control system can also be built to automatically translate spoken user input from the language spoken by the user into another language or a special coding like e.g. a defined standard language in which all measurement information and/or metadata will be stored.

An optional subsystem of the voice control can also be built to function as an access control unit, which may lock or unlock the whole system or some functionalities of the measurement system 1, for example in a way that some setup menus of the measuring system can only be accessed by persons known to be specially skilled or to ensure that the device will be inoperable for purloiners. For access control, the subsystem can e.g. recognize an operator 5 of the system by her voice, which means according to special, unique acoustic characteristics of her voice when she speaks. In another example or in addition, the operator 5 can be demanded to speak a password for authorization.

In **Fig. 5****,** an example of an embodiment of a hand guided coordinate measurement system 1 according to the invention in form of a GNSS surveying pole is shown. The worker 5 who operates the pole is mapping coordinate information of features of a patch of land as measurement objects 4. In the shown example, he uses the GNSS surveying pole which he is holding in his hands to surveys the exact geographical location of a traffic sign 4 as measurement object 4 to be mapped as a feature of the land. He is therefore holding the measurement tip of his hand guided coordinate measurement system 1 to the location of the sign 4 and triggers a measurement (which captures actual GPS coordinate information of the measurement tip) by issuing a triggering voice command "Map Location!" as elaborated elsewhere in this document.

In this example, he then also applies metadata to the coordinate information just measured, in order that a cartographer is able to identify the measurement as a traffic sign which is warning about elk-crossings, when the measurement data will be evaluated in the office later on. Details on the metadata input by voice control according to the invention can be found elsewhere in this document.

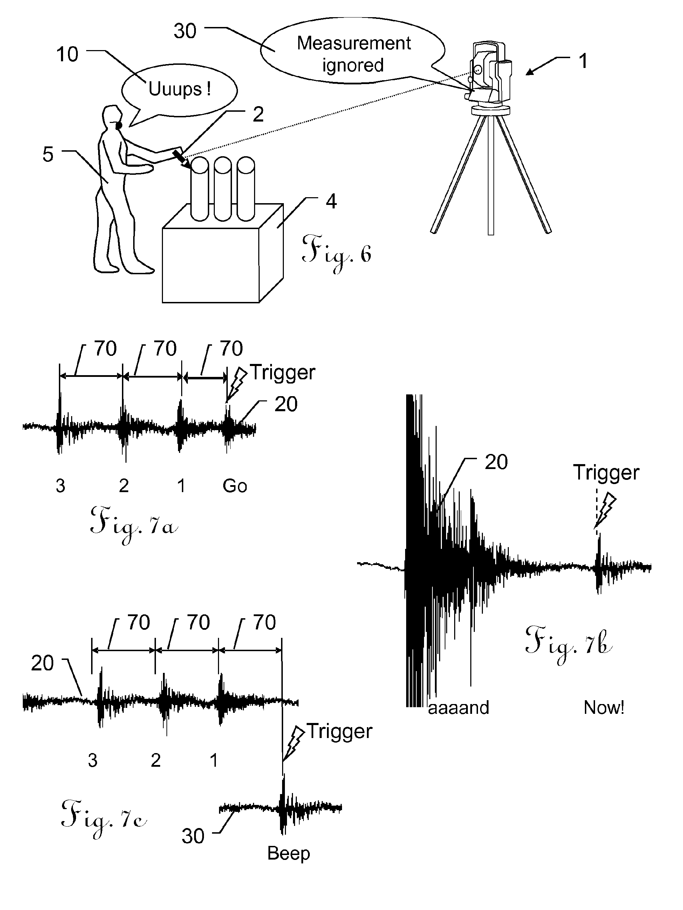

**Fig. 6** shows another example of an embodiment of a hand guided coordinate measurement system 1 according to the invention in form of a Laser Tracker, where a worker 5 is holding a measurement probe 2 to approach geometrical features of the object 4 of which the geometry has to be verified and compared with desired coordinate information. The probe can in this example be a touch probe, which is trigger by voice, but can e.g. in a special embodiment also be touch probe triggered by a touching force when the tip of the probe touches the surface of the object 4, after the worker 5 armed the measurement probe by a voice command - until it will be de-armed by another voice command. Before or after each trigger that is issued by touching the object, the acoustic input unit awaits meta-information related to this touched point.

In the shown case, the worker 5 has accidentally triggered the touch trigger of the measurement probe 2 he is holding in his hand. He more or less intuitively speaks "Uuuups" 10 which will be interpreted by the system configuration unit of the coordinate measurement system 1 according to the invention. Based on the evaluation and interpretation by the configuration unit, according to which the interjection 10 of the worker 5 is to be interpreted as information about a mistake, the acoustic feedback unit of the measurement system 1 issues an acoustic voice feedback 31 "Measurement ignored" and dismisses the previous, faulty measurement. Thereby, the worker 5 can seamlessly continue his labour with the system 1 according to the invention. In a prior art system, the worker would have to put the measurement probe 2 he is holding aside, walk to the base station of the measurement system and manipulate the local user terminal to delete his last measurement, then go back to pick up his measurement probe 2 and walk back to object 4 to proceed with his work.

**Fig. 7a, Fig. 7b and Fig. 7c** are showing some examples of waveform patterns for illustrating the special aspect according to the present invention, in which voice commands for a triggering a measurement with a hand guided coordinate measurement system 1 comprise multiple distinguishable sound sequences.

In sub-figure 7a, an example of a sound pattern of a voice command for triggering according to the present invention is shown as an amplitude diagram. The triggering voice command is a count down "3 ... 2 ... 1 ... GO!" wherein "GO" indicates the desired measurement time. According to the present invention, the voice command for triggering is therein clearly split into multiple sound sequences, which are separated by pauses in-between the sounds (in this case words or numbers). The shown sequences are providing a rhythm in which they occur, indicated by the time slots 70. One or more first sound sequences are therein preparative portions, which are identified according to their lingual content, whereby the voice command for triggering can be identified as such, and thereupon the trigger of the measurement is armed. The following one or more second sound sequences will then define the point in time of triggering, wherein this defining can be done without interpretation of the lingual content, but according to physical characteristics of the sound sequences, such as e.g. an amplitude or frequency profile, which can also be described as non-linguistic characteristic. In contrast to a linguistic analysis, the physical characteristic can be evaluated more deterministic and in real time. For example, the physical characteristic can evaluate the point in time of the starting of the sound sequence or another portion thereof, whereas an optionally also evaluated textual interpretation of this sound sequence will only be available after the end of the sound sequence, when the trigger signal has already been issued. In standard algorithms for voice recognition, the timing of the cognition of a voice command is only available in a not well defined time after the end of the command, which is too fuzzy for a triggering of a measurement. According to the invention, the point in time is exactly defined, in particular more exactly than in ordinary voice control systems, but still the present voice interface is not limited to triggering only, but can also response to the linguistic content of a voice command provided as spoken text by a worker 5. The shown command for triggering in form of a count down is only a non limiting illustrative example and can be substituted by other commands which comprise at least two physically well distinguishable sound sequences. Some alternative illustrative examples are also given within this document.

For example in sub-figure 7b, the preparative portion is the introductive sound sequence "aaaand", which is followed by a short pause and the time point defining "Now!", of which the starting portion of the sound sequence is tripping the trigger, which was armed by the preparative portion before.

In the illustrative example of another embodiment in sub-figure 7c, the voice command for triggering is also a count down "3 ... 2 ... 1 ... _", where the sound sequence at the time of the actual triggering is omitted - which is shown in the upper waveform 20. This is possible due to the fact that the count-down provides multiple second sound sequences which are resulting in a regular (or at least a known) rhythm pattern, which in the shown example is equally spaced by the indicated pause times 70. The point in time of the trigger is then defined by a prediction according to this known rhythm, which has been defined by the second sound sequences before. For example the point in time can be defined as being another pause time 70 after a third sound sequence of the count down, wherein a presence or absence of an actual fourth sound sequence at this point in time can be neglected or evaluated after the point of time when the trigger signal has been already issued.

The lower waveform 30 indicates a response of the feedback unit, providing an acoustic indication of the point in time of the trigger, so the operator is aware of it and also knows that the command for triggering was understood and a measurement was executed by the system 1. Alternatively to the shown beep, the system could also provide other information and/or the measurement value as confirmation, for example in speech by the acoustic output unit.

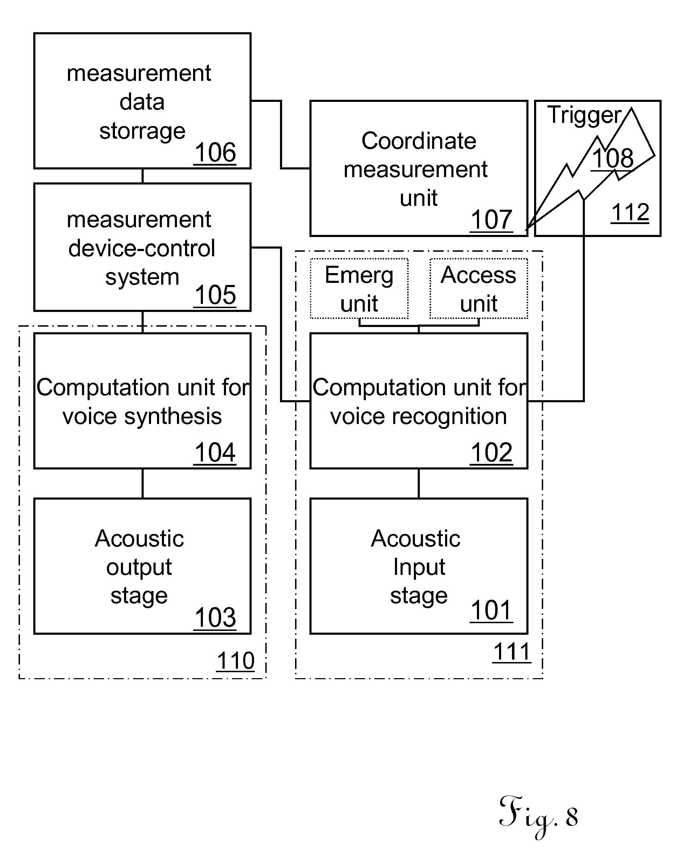

**Fig. 8** shows an example of a block diagram of an embodiment of a hand guided coordinate measurement system 1 according to the present invention. For illustrative purpose, the segmentation of the blocks might be chosen in a slightly different way than in the explanations before, as this figure is more related to a possible logical structuring used to explain some special aspects of the invention.

Nevertheless, it shows an embodiment of exactly the same invention, only from a slightly different perspective.

The acoustic input unit 111 with the input stage block 101 can be associated with both, the system configuration unit and the measurement triggering unit. It picks up acoustic waves, in particular the voice of the operator, and preprocesses them, e.g. by a microphone followed by amplifiers, filters, compressors, an analog to digital converter, etc., wherein some of the preprocessing can also be done after digitalization.

An embodiment of the voice control system according to the invention can for example also include more than one microphone to realize an ambient noise reduction system. As an example of an embodiment, one microphone can be sensitive into a direction near the operator's mouth and at least one additional microphone can be sensitive into a direction remote from the operator's mouth. When the measurement system is operated in a noisy environment, the reliability of the speech recognition system can thereby be enhanced. Also, the perceptibility of the acoustic system output can be enhanced based on a compensation or countering of environment noise, e.g. in a noisy environments like in outdoor applications when a TPS- or GNS-system is operated near roads or construction sites, but also for an in indoor application of e.g. an articulated arm which is operated in a noisy manufacturing or production environment.

The block 102 is called computation unit for voice recognition and receives the preprocessed acoustic signals from block 101 within the acoustic input unit 111. In one aspect of the present invention it analyzes and distinguishes the received acoustic information into multiple categories, processes them accordingly and provides the processed information to other blocks, for example to the here shown measurement device control block 105, to the trigger block 108, to an optional emergency block, an optional access control block, and/or maybe to other blocks not shown here.

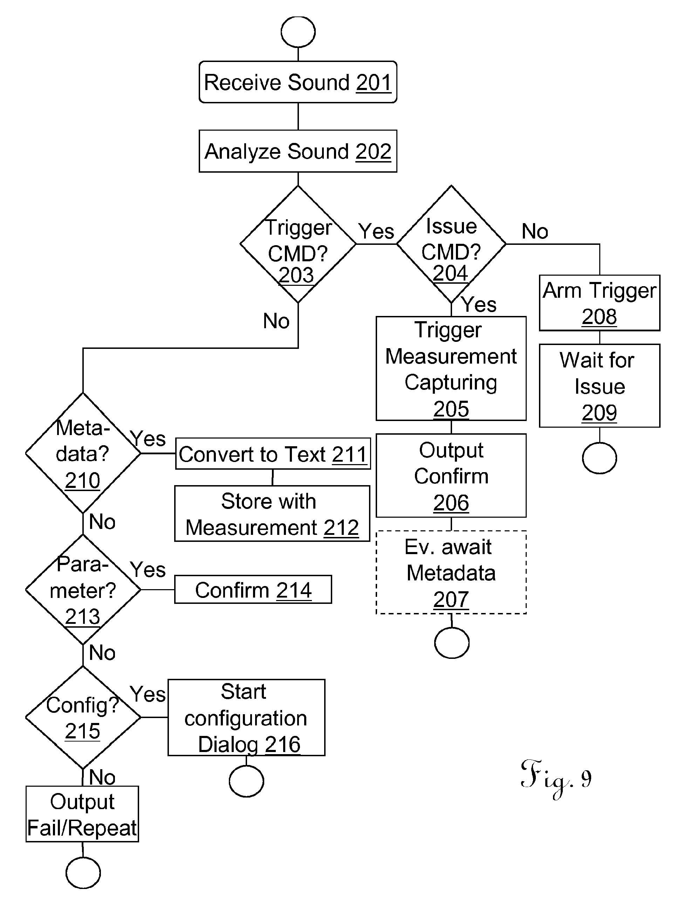

The analyzing and splitting or distinguishing of the voice commands according to an aspect of the present invention (wherefore also the following Fig. 9 is referenced), comprises a distinguishing between for example at least system configuration commands and triggering commands. The system configuration commands are not highly time critical and are evaluated by a speech recognition algorithm (examples are known in the according field of the art), which identifies control commands and/or converts the speech input to text strings. The resulting information is then passed to the measurement device control block 105.

The trigger commands, which are in fact time critical, are treated differently, in particular that or those sound sequence(s) which define the point in time when the measurement takes place. In the example of a multiple sequence triggering sound, the first sound sequence, which is preparative for arming the trigger (for example as discussed above), can be evaluated in a similar way than a configuration command, but the one or more following second sound sequences, which are defining the point in time, can in the present invention evaluated according to their timing (and only optionally in a second instance with respect to their linguistic content e.g. in order to confirm the operator did not speak something else like for example to cancel the measurement). In a special embodiment, the beforementioned arming of the trigger can also be indicated to the operator, e.g. by a sound output. For the timing, in particular a characteristic in the amplitudes of the waveform of the sound sequences can be evaluated. For example, the sound sequences can be words whereof amplitude or loudness peaks indicate an exact point in time. Pauses between the sound sequences will be characterized by a distinguishable lower amplitude or volume, optionally within defined frequency ranges only, for example a naturally occurring pause in-between two words (or even within some specials single words that can be evaluated as voice commands providing multiple sound sequences on their own). Such an evaluation according to physical characteristics is more deterministic and faster than the voice recognition which is used for configuration commands, wherefore a point in time can be defined with high accuracy and repeatability. Also, the speech recognition would only be capable to evaluate the spoken command a certain time after it is finished, whereas the timing evaluation of the sound sequences provides an immediate result, which can be available before the sound sequences has ended. As explained, based on this special principle of not analyzing the voice itself for the special purpose of triggering, also a prediction of an end of a countdown can be used to issue a trigger event. When a known rhythm of the sound sequences (e.g. equidistant or otherwise known) is underlain, a prediction of the exact point in time of the trigger is determinable by this rhythm, even when the last triggering sound sequence is omitted.

Thereby, the voice command for triggering can be split into at least a first and at least a second sound sequence, which are separated by pause, and which can in particular be identified by peaks in their amplitude characteristics. One or more first sound sequences of the voice command for triggering are thereby used as a preparative portion, so to say to arm the trigger, and one or more of the second sound sequences are used to define the point in time of trigger, in particular only based on its amplitude characteristics. Examples of such voice command for triggering were given above, although the presented examples are not to be considered limiting but are rather presented for illustrative purposes, mostly with examples of triggering words which are intuitively related to a triggering of a measurement. Nevertheless, many other voice commands for triggering can be used, the voice commands can also comprise artificial sounds which are not necessarily a word of an official language. A practical selection, in particular of the second sound sequence, can be done according to the commands amplitude profile, wherein steep peaks are generally preferred.

In a special embodiment, also notch filters for dedicated frequencies can be used for pre-filter the acoustic input before an evaluation of the triggering point in time is done, where as another example also phase information of the sound sequence at one or more special frequencies can be used to define the point in time.

Further, the acoustic input unit of the voice control system according to the invention can optionally comprise a subsystem called emergency unit and shown dashed in the block 109, which is built to act as an emergency stop unit. In case of an emergency, the operator or another person near tends to automatically scream or shout and such a spoken emergency command will be called much quicker than searching for and pressing an emergency button even if it is located somewhere at or near the device. For example, an emergency stop could be necessary to avoid injury of the operator or damage of the system, e.g. through a laser beam or through motorized components of the system. The operator or another person will then cry or shout keyword like "Stop!", "Aaaaaau!", "Help!" or cusswords or the like, which can be recognized by the emergency voice control subsystem, which will then issue an emergency shutdown and/or issue an alarm and/or establish a communication link to call for help. Another emergency unit (alternatively or in addition to the detection of emergency keywords) can detect an emergency case by the voice control subsystem based on the acoustic voice characteristics, e.g. by recognizing a sudden volume increase or a sudden pitch change or an increase in voice frequency, velocity of spoken words, etc. Therein, also the linguistic content of such an emergency command can stand behind other signal characteristics, as those other characteristics can often be detected much faster, like an abrupt amplitude increase or the like.

By the trigger unit 112, the point in time of the triggering, also referred to as triggering event, can be provided as an, preferably electrical or optical, trigger signal 108 to the coordinate measurement unit 107, which is then capturing measurement values as known in the art, e.g. similar to a signal from a trigger button. The measurement unit 107 then provides the coordinate information for further processing, e.g. to the shown block 106 which has a measurement data storage.

The acoustic feedback unit 110 with the acoustic output stage in block 103 can e.g. comprise a loudspeaker and an amplifier, but can also be a part of a kind of headset, where a microphone of the acoustic input stage 103 can also be comprised. This block is driven by a computation unit for voice synthesis of block 104, which is part of the feedback unit that is built to provide acoustic feedback to the operator. Techniques for speech output and speech synthesis by computation unit are known in the related field of the art.

The here shown measurement device control block 105 provides the raw data to be output as a feedback by output stage 103. It also receives the system configuration commands and metadata from the voice recognition block 102 and handles them accordingly, e.g. by selecting measurement functions or programs, tagging coordinate information with corresponding metadata, handling voice dialogs with the operator and/or many more functions.

**Fig. 9** shows an example of a simplified embodiment of a flowchart of a hand guided coordinate measurement system 1 according to the present invention, in particular of the functions directly related to voice control aspects of the present invention.

On top, in step 201, the acoustic sound information is received, by the device itself or by one or more remote acoustic-to-electric transducers, e.g. by means of the acoustic input stage 101 of Fig. 8. Then the received sound is analyzed in step 202, e.g. by means of the computation unit for voice recognition 102 of Fig. 8.

In the shown embodiment, it is then distinguished, if the received sound sequence is a trigger-command (=Trigger CMD) or not in step 203. If it is a trigger-command, it has to be considered time critical and the measurement trigger unit has to deterministically issue a trigger signal for capturing coordinate values. The shown embodiment illustrates the more complex, special aspect of a multiple sequence trigger-command. If it is a second sound sequence and the trigger has already been armed by a first sound sequence before, it defines the point in time of trigger, and the path to the Trigger Measurement Capturing step 205 is chosen in step 204. Embodiments of how the point in time is determined in detail are discussed elsewhere in the document. After capturing, the system can provide feedback in the output confirm step 206 and can optionally await metadata in step 207 and/or await a new sound to be received in step 201.

If the Trigger command of step 203 is not the issue command of step 204 - or in other words no second sound sequence, but the command is a preparative first sound sequence, it arms the trigger in step 208 and awaits the second sounds sequence in step 209 by the receiving of sound in step 201.

The path of the second sound sequence evaluation in step 204 was described first, as this is the more time critical part that requires an exact and deterministic timing, as it has to exactly define the point in time when the measurement is captured in a deterministic and reproducible way, which preferably has to be executed in real time by the computation unit 102 of Fig. 8. In a special example, the above mentioned trigger signal for the measurement capturing of step 205 can even be issued before the second sound sequence, which defines the trigger timing, has actually ended. In another special example, where the trigger signal is issued after the end of the sound sequence, it is issued an exactly defined time period after a certain characteristic of the sound sequence that defines the point in time of the trigger signal - such is not the case in classic speech recognition algorithms. Accordingly, in another illustration, the evaluation for second sound sequences of step 204 could also be drawn to be directly based on the receiving stage 201 and arranged in parallel to the non time critical steps of the configuration or eventually also the arming.

The path of step 203, when the received sound is no voice command for triggering, is in general not required to be highly deterministic, wherefore standard voice recognition techniques can be used which do not have strict timings and where the result of the voice evaluation can be presented an undefined or random time period after the sound has finished, without decreasing the measurement performance of the system. Some relevant examples of this are given in the following.

The voice command is therein identified and used as metadata in step 210, in which case the spoken metadata text from the worker can e.g. be converted to literal text in step 211 and stored in association with previous or forthcoming measurements of a trigger in step 212. In step 213, the voice command is identified and used as parameter data for the measurement and/or the measurement system, which is then processed according to its nature, which can in the following be confirmed by an acoustic output in step 214, e.g. by a beep, or spoken which can e.g. repeat the action or value processed by the command. Step 215 identifies and uses the voice command as a configuration command, which e.g. can start a configuration dialog, which guides the operator to a desired functionality of the system by vocal interaction of speech output and speech input - as indicated in step 216, wherein the vocal interaction can comprise additional receiving and evaluating of the operators voice. If a voice command is received and identified as such, but not understood by the system in its content, then a fail-information or a request for repeating can be issued as e.g. shown by step 217.

Apparently, the steps of this flowchart can also, at least partially be parallelized, in particular such that the sound receiving and evaluation is done (quasi-) continuously.

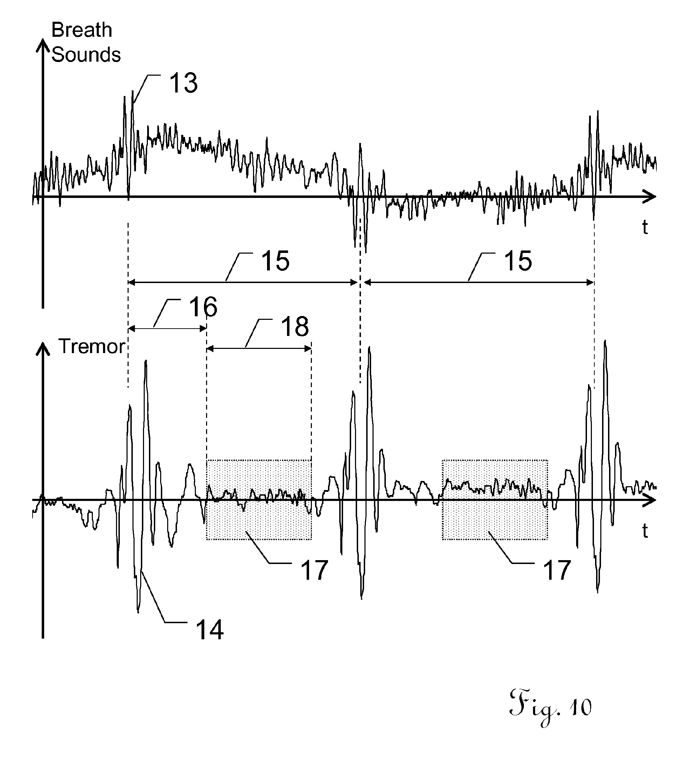

**Fig. 10** shows an example of a seismographic tremor curve of a handheld probe 2 in measurement system 1 according to the present invention. If the tremor 14 is compared to the also shown breathing rhythm 13, it can be seen that there is a coherence in a way that the operators hand 5 tends to be steadier during breathing out phases. As a special aspect of the present invention, the system for receiving sound of the voice control can also pick up those breathing noise, in particular when a headset is used. In classic voice recognition systems, there is taken effort to filter such breathing noises away as far as possible. According to a special aspect of the present invention, the voice control for triggering can explicitly evaluate those breathing noises and define the point in time of the trigger into a phase of breathing 17 when the operator 5 is steady, in particular into a berthing out or breathing pause period. Accordingly an embodiment of the measurement triggering unit can be built in such a way to determine breathing noises, e.g. by a microphone which in particular is one also be used for voice control, and which defines the point in time of triggering according to this breathing noise, preferably in such a way that it falls within a breathing pause or slow breathing out phase.

The upper curve 13 shows breathing noise captured by a microphone and preprocessed by a digital filter. Therein, the breathing rhythm with the period 15 can be seen. As this period is not a longtime constant and not equal for each worker, it is preferably online-determined from the acoustic signal 13.

The lower curve 14 shows a with curve 13 time corresponding capturing of the tremor of the operators hands, as it can e.g. be captured by an accelerometer or by a position measurement unit. It can be seen that the stillest phases, marked by the squares 17, are correlated with the breathing rhythm 15 of the curve 13. To achieve an highly accurate measurement and to avoid drawbacks from unsteady holding of the probe, the present invention uses the voice control interface of the hand guided measurement system to determine this breathing rhythm and to align the point in time of triggering a measurement value capturing to phase in time when the hand most still, which is in the shown curves within the squares 17. Those squares can e.g. be defined by a delay time 16 after the well recognizable peak of a change of breathing direction and by a time span 18 during which the worker is most stable.

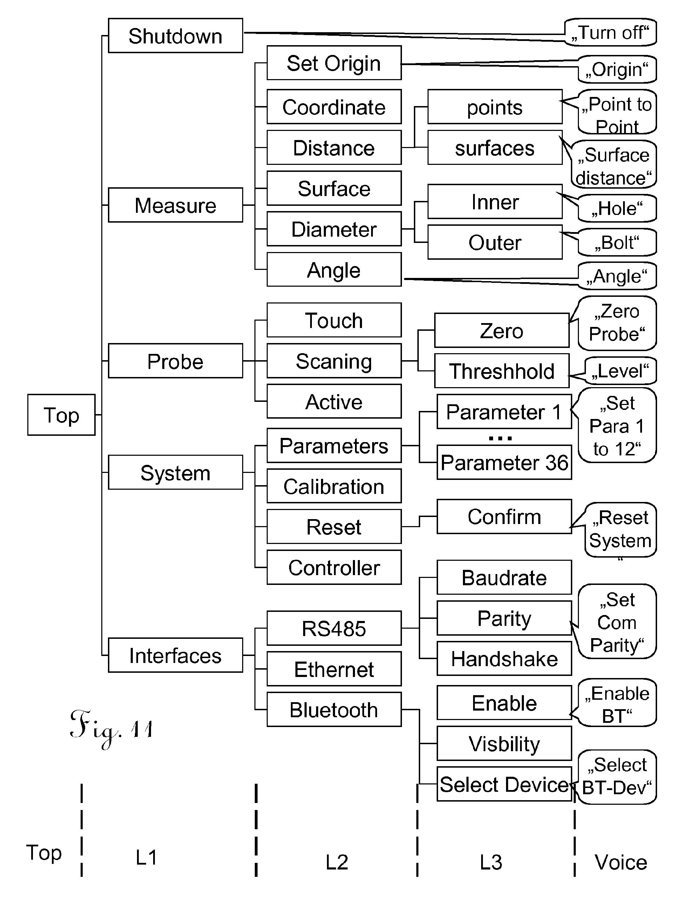

**Fig. 11** illustrates an example of an embodiment of a system configuration unit (105) built to setup system or measurement parameters, which is operated by spoken text from the worker (5) via the voice control. Therein, the system configuration unit (105) provides a flat command hierarchy where sub-menu commands for control and setup of the measurement system (1) - as shown in the hierarchical levels Top, L1, L2 and L3 at the bottom of the page - are embodied to be at least partially directly accessible by non hierarchical voice commands. In the shown example, the actual names of blocks in the hierarchical arrangement are not to be considered relevant or limiting. The illustration primarily shows that elements of a hierarchal structure, which is indicated by the tree of connected rectangles, can be directly accessible by voice-commands, which are shown as balloons, regardless of the hierarchical level they are associated with.

The figure merely illustrates an example, in which the voice controlled system configuration unit according to the invention can provide a flat access to otherwise hierarchically grouped system and/or measurement parameters. The naming of the shown examples of commands and parameters of the measurement system in the blocks and the according voice commands in the balloons are not to be considered limiting and not to be considered exhaustive. It shows e.g. that a simple voice command "Turn off" can access a L1-function "Shutdown" the same way as another voice command "Enable BT" can access the L3-function "Enable" in the lower hierarchy of "Top - Interfaces-Bluetooth - Enable - Yes", or the like. The voice commands according to this aspect of the invention can therefore be considered as shortcuts for the otherwise hierarchical menu items, making the access by voice control for the worker much easier and faster than a navigation through the menu hierarchy, be it by keyboard or by voice. As an additional option, the system can therein still provide a hierarchal access as alternative, e.g. if the operator is not fully aware of all the options to choose from. For example, he can request the system to vocally output the possible menu options by an according voice command and thereby go into an interactive vocal dialog with the system according to the invention.

In another, here not shown embodiment, the voice commands can e.g. also be in a special hierarchy which his adopted to common speech practice, which a worker will intuitively use and which is different from the one shown on a display. For example, the word order can be reversed or certain top levels can be omitted, like the usage of the voice command "Set Baudrate of com 1 to 9600" for accessing the hierarchical structure of "Top menu - Interfaces - RS485 - Baudrate - Set value - 9600", or the like.

A skilled person is aware of the fact that details, which are here shown and explained with respect to different embodiments, can also be combined in other permutations within the sense of the invention.

## Claims

1. A hand guided coordinate measurement system (1) for a surveying of geometrical features of an object (4), in particular a tachymeter, a laser tracker or an articulated arm, comprising
- a measurement probe (2) to be manually operated by a human worker (5) to approach the to be surveyed object features (4) by hand-guidance, and
- a measurement unit (3) built for determining geometrical coordinate information of the geometrical features of an object (4), which are approached by the measurement probe (2), in at least three dimensions, based on a trigger signal (108),
**characterized by**,
a voice control with an acoustic input unit (111) built to receive and evaluate acoustic commands from the worker (5), which comprises a recognition system for a spoken language command, and
an acoustic feedback unit (110) built to provide acoustic feedback to the worker (5).

2. A hand guided coordinate measurement system (1) according to claim 1, **characterized in that** the acoustic input unit (111) is built to capture meta-information (10) for the geometrical coordinate information, which is provided as spoken text by the worker (5) and evaluated via the voice control, in particular wherein meta-information (10) can comprise a literal description of the coordinate information.

3. A hand guided coordinate measurement system (1) according to any one of claim 1 or 2, **characterized in that** the measurement system (1) comprises a system configuration unit (105) built to setup system or measurement parameters, which is operated by spoken text from the worker (5) via the voice control, and wherein the system configuration unit (105) provides a flat command hierarchy where sub-menu commands for control and setup of the measurement system (1) are directly accessible by a nonhierarchical voice command.

4. A hand guided coordinate measurement system (1) according to any one of claim 1 to 3, **characterized in that** the measurement system (1) comprises a measurement trigger unit (112) built to define a point in time when the geometrical coordinate information is captured by issuing the trigger signal (108), which is operated by the voice control.

5. A hand guided coordinate measurement system (1) according to claim 4, **characterized in that** the measurement trigger unit (112) is built in such a way that a voice command for issuing the trigger signal (108) is split in at least a first and a second sound sequence, separated by a pause, wherein the first sound sequence is a preparative portion for arming the trigger unit (112) and the second sound sequence defines the point in time of the trigger signal (108).

6. A hand guided coordinate measurement system (1) according to claim 5, **characterized in that** the point in time of the trigger signal (108) is before the end of the second sound sequence.

7. A hand guided coordinate measurement system (1) according to claim 5, **characterized in that** a certain acoustic characteristic during the voice command for issuing the trigger signal (108) defines the point in time of the trigger signal (108), which characteristic happens before the end of the voice command.

8. A hand guided coordinate measurement system (1) according to claim 5, **characterized in that** the point in time of the trigger signal (108) is a time period after the second sound sequence, in particular wherein the time period is defined by, preferably equal to, the pause between the first and the second sound sequence.

9. A hand guided coordinate measurement system (1) according to claim 5, **characterized in that** a second sound sequence of the voice command at the actual point in time of the trigger signal (108) is omitted and the point in time of the trigger signal (108) is defined by one or more first and/or second sound sequences before,
in particular wherein the preparative portion has a regular rhythm pattern and the point in time of the trigger signal (108) is predicted based on the rhythm pattern, in particular wherein the point in time is determined on basis of the rhythm pattern of the sound sequences of the first and/or second sound sequences.

10. A hand guided coordinate measurement system (1) according to any one of claim 1 to 9, **characterized in that** the acoustic input unit (111) is built to determine a breathing rhythm of the worker (5) and the trigger unit (112) is built to align the point in time of the trigger signal (108) to a breathing pause or to an reposeful exhaling period of the breathing rhythm.

11. A hand guided coordinate measurement system (1) according to any one of claim 1 to 10, **characterized in that** the acoustic input unit (111) comprises an emergency unit, built in such a way that the measurement system (1) is shut down to a safety state upon a change in the characteristics of the voice of the worker (5), in particular to an abrupt increase in volume or pitch and/or to a specific keyword or keysound.

12. A hand guided coordinate measurement system (1) according to any one of claim 1 to 11, **characterized in that** the acoustic input unit (111) comprises an access control unit built to recognise a specific worker (5) according to his specific voice characteristics.

13. A hand guided coordinate measurement system (1) according to any one of claim 1 to 12, **characterized in that** it comprises a classification unit built to distinguish the spoken language command into different categories, wherein at least one of the categories is evaluated according to acoustic properties of the spoken language command, in particular according to nonlinguistic acoustic properties, in particular wherein the categories comprise at least two of a meta-category, a-setup-category, a trigger category, a breathing rhythm category, an emergency category and/or an access category, each handled by the according units.

14. Method of triggering a hand guided coordinate measurement system (1), in particular a tachymeter, a laser tracker or an articulated arm, for a surveying of geometrical features of an object (4) with
- a manual guiding of a measurement probe (2) by a human worker (5) for an approaching of the to be surveyed object features (4) with the measurement probe (2) by hand-guidance, and
- a determining of geometrical coordinate information of the geometrical features of an object (4) in at least three dimensions by means of a measurement unit (3) based on a triggering event,
**characterized by**,
a voice control with a receiving and evaluating of acoustic commands from the worker (5), which comprises recognizing a spoken language command, and
a providing of acoustic feedback to the worker (5),
in particular, with operating by voice control at least one of
- an inputting of meta-information for the geometrical coordinate information by the acoustic command, preferably by spoken text,
- a setting up of system or measurement parameters of the measurement system (1) by the acoustic command, preferably by spoken text,
- a defining of a point in time when the coordinate information is captured by the trigger event based on the acoustic command, preferably according to nonlinguistic physical characteristics of the acoustic command,
- a detecting of a change in the characteristics of the acoustic commands and thereupon initiating a shutting down of the measurement system (1) to a safety state, and/or
- a recognising of a specific worker (5) according to his specific voice characteristics and thereupon providing an access control to a functionally of the measurement system (1).

15. Computer program product comprising program code stored on a machine-readable medium, or computer-data-signal embodied as an electromagnetic wave, for triggering a hand guided coordinate measurement system (1) by voice control, which is receiving a voice command for triggering, in particular with splitting the voice command for triggering in at least a first and a second sound sequence - separated by a pause - wherein the first sound sequence is arming the trigger as a preparative portion and wherein the second sound sequence is defining the point in time of the triggering event, preferably according to nonlinguistic physical characteristics of the second sound sequence, especially for computing the voice control of the method according to claim 14, in particular executed in a computation means of an hand guided coordinate measurement system according to any one of the claims 1 to 13.
